# NEW EUROPEAN PATENT SPECIFICATION

(11) **EP 3 726 049 B2**
(45) Date of publication and mention of the opposition decision: **01.04.2026**
(45) Mention of the grant of the patent: 01.02.2023
(21) Application number: 19380007.5
(22) Date of filing: 15.04.2019
(51) Int. Cl.: F03D 1/06, F03D 80/30

(54) **ROTOR BLADE AND METHOD FOR MANUFACTURING A ROTOR BLADE**
ROTORBLATT UND VERFAHREN ZUR HERSTELLUNG EINES ROTORBLATTS
PALE DE ROTOR ET PROCÉDÉ DE FABRICATION D'UNE PALE DE ROTOR

(43) Date of publication of application: 21.10.2020
(73) Proprietor: SIEMENS GAMESA RENEWABLE ENERGY INNOVATION & TECHNOLOGY, S.L., 31621 Sarriguren (Navarra) (ES); Siemens Gamesa Renewable Energy A/S, 7330 Brande (DK)
(72) Inventor: Victor, March Nomen, 08194 Les Fonts (ES); Girolamo, Donato, 82020 Molinara (BN) (IT); Christiansen, Thomas Lehrmann, 9000 Aalborg (DK); García Ayerra, Fernando, 31007 Pamplona (Navarra) (ES)
(74) Representative: SGRE-Association

(56) References cited:
- EP-A1- 3 091 228
- EP-A1- 3 330 528
- WO-A1-2015/070876

## Description

The present invention is related to rotor blades for wind turbines and to a method for manufacturing a rotor blade of a wind turbine.

Rotor blades of wind turbines are also denoted wind blades. Conventional rotor blades structural designs mostly comprise a plurality of sub-components, such as spar caps, at least one shear web sandwiched in between the spar caps and a plurality of blade shells, also denoted shell panels, forming a skin of the rotor blade. All these sub-components are conventionally designed in composite materials, e.g. glass fiber reinforced plastics (GFRP), carbon fiber reinforced plastics (CFRP), basalt, boron or the like, that are provided in form of dry fiber mats and/or prepregs and further processed in a molding process such as vacuum assisted resin transfer molding (VARTM) or the like. A rotor blade is known from document EP 3 330 528 A1.

Spar caps fulfil the function of primary load carry sub-components, especially for the ultimate and fatigue longitudinal flapwise loads. An efficient design of these sub-components consists in employing unidirectional (UD) composite layups where the fibers, that mostly provide the stiffness and strength to the composite material, are aligned in a longitudinal direction, especially in the main direction of the structural loads. The rotor blade is exposed to lightning strikes. The rotor blade is therefore typically equipped with a lightning protection system (LPS). This would commonly consist of a down conductor cable extending from the tip of the blade to its root at which electrical contact to the grounding system of the wind turbine is made. Lightning attachment points also known as receptors are placed at the blade surface to ensure that lightning strikes to the blade are guided to ground without harming the blade. The receptors are in electrical contact with the down conductor to enable the transfer of lightning current from receptor to ground. In order to equalize the potential differences between the down conductor of the lightning protection system and the carbon fibers, electrical contacts are made between the down conductor and carbon fiber. However, the lightning current injected at the electrical contact may result in electrical arcing and subsequent delaminations and structural failure.

Therefore, it is an object of the present invention, to provide a method for manufacturing a rotor blade of a wind turbine and a rotor blade for a wind turbine that do not have these drawbacks or at least partially do not have these drawbacks. In particular, it is the object of the present invention, to provide a method and a rotor blade that improves the transmission of electric current and prevents or at least reduces the risk of electrical arcing.

This object is solved by the patent claims. Therefore, this object is solved by a rotor blade of a wind turbine with the features of independent claim 1 and by a method for manufacturing a rotor blade of a wind turbine with the features of independent claim 15. Further details of the invention unfold from the dependent claims as well as the description and the drawings.

According to a first aspect of the invention, the problem is solved by a rotor blade for a wind turbine according to claim 1 with
a rotor blade tip section, a rotor blade mid section, a rotor blade root section and a rotor blade longitudinal axis, extending from the rotor blade tip section through the rotor blade mid section to the rotor blade root section. In the rotor blade mid section the rotor blade comprises a spar cap with a spar cap tip area, a spar cap mid area and a spar cap root area, wherein the spar cap tip area is pointing to the rotor blade tip section and the spar cap root area is pointing to the rotor blade root section. In the spar cap mid area the spar cap comprises a carbon fiber body with a plurality of carbon fiber layers of carbon fibers, wherein a thickness of the carbon fiber body in a body center zone of the carbon fiber body is greater than a thickness of the carbon fiber body in a body tip zone of the carbon fiber body, located between the body center zone and the spar cap tip area. A carbon fiber layer can comprise a plurality of stacked carbon fibers, preferably with unidirectional orientation. The current injection contact means are only in electrical contact with one or multiple carbon fiber profiles at the end of the carbon fiber body and with a down conductor to inject current into the current injection contact means.

A current injection contact means of the rotor blade is in electrical conductive contact with the body tip zone, thereby constituting a current injection contact zone of the body tip zone. According to the invention, the current injection contact zone is extending at least in a direction parallel to the rotor blade longitudinal axis and in a direction of the thickness of the carbon fiber body. Preferably, a current injection contact means of the rotor blade is in electrical conductive contact with the body root zone, thereby constituting a current injection contact zone of the body root zone.

In the rotor blade mid section, the rotor blade comprises the spar cap. In other words, the rotor blade mid section is a section of the rotor blade that is supported by the spar cap. Preferably, the rotor blade mid section extends over at least 50% of the lengths of the rotor blade. According to the invention, the rotor blade longitudinal axis can be straight or bent.

The spar cap comprises the spar cap mid area, the spar cap tip area and the spar cap root area. The spar cap mid area comprises the carbon fiber body with the plurality of carbon fiber layers of carbon fibers. Preferably, the carbon fibers or at least half of the carbon fibers are oriented in a direction parallel or at least substantially parallel to the rotor blade longitudinal axis. This orientation is also denoted as "unidirectional orientation". Carbon fibers have the ability to transmit current, however, an electrical conductibility of carbon fibers along the fiber length is fundamentally higher than an electrical conductibility of the carbon fibers in a direction perpendicular to the fiber length. Preferably, the spar cap tip area and the spar cap root area each comprise fiber material with a much weaker electrical conductivity, such as glass fibers or the like. In the spar cap, the fibers are preferably impregnated with a matrix material, such as resin or the like. Preferably, the spar cap tip area, the spar cap mid area and the spar cap root area are molded together by the matrix material.

In the spar cap mid section, the plurality of carbon fibers is arranged in several layers. Moreover, in the body center zone the thickness of the carbon fiber body is greater than the thickness in the body tip zone. This is preferably achieved by a higher quantity of carbon fiber layers in the body center zone. Preferably, the thickness of the carbon fiber body changes gradually within the body center zone and/or from the body center zone to the body tip zone and/or within the body tip zone. Preferably, the carbon fiber body has different thicknesses. It is further preferred that a thickness of a part of the body tip zone that is adjacent to the body center zone is greater than the thickness of a part of the body tip zone that is further away from the body center zone.

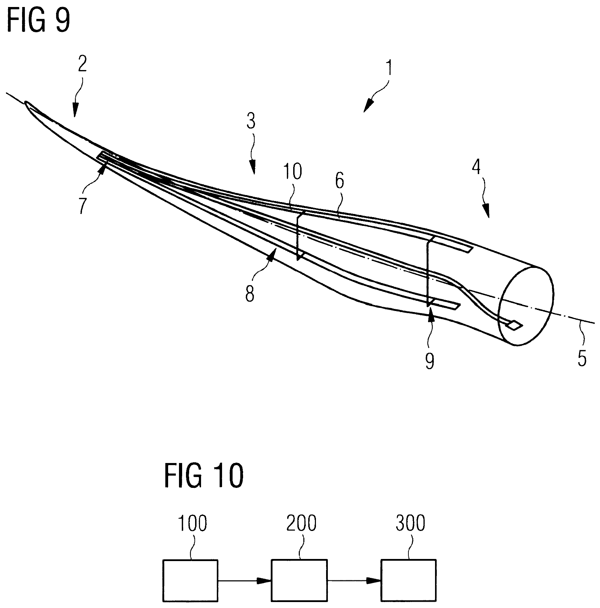

The current injection contact means of the rotor blade is configured as a lightning rod in order to prevent a direct lightning strike onto the rotor blade. The current injection contact means is further configured to inject current from a lightning into the carbon fibers of the rotor blade in order to guide the electrical energy towards the rotor blade root section. In other words, in order to equalize the potential differences between the down conductor of the lightning protection system and the carbon fibers (see fig. 9, which shows the down conductor in parallel with the two carbon beams), electrical contacts are made between the down conductor and carbon fiber to inject part of the lightning current into the carbon fibers. For this purpose, the current injection means is in electrical conductive contact with the body tip zone. The area of the body tip zone that is in electrical conductive contact with the current injection means is defined as current injection contact zone. The current injection contact means can be configured as one part or multiple segmented part.

In order to increase the transmission of current from the current injection means into the carbon fibers of the carbon fiber body, the current injection contact zone is extending at least in a direction parallel to the rotor blade longitudinal axis and in a direction of the thickness of the carbon fiber body. In other words, the current injection contact zone is extending in a way to contact carbon fibers of different carbon fiber layers. Preferably, the current injection contact zone is also extending over a width of the carbon fiber body. Thus, the current injection means is in electrical conductive contact with a plurality of carbon fibers of different carbon fiber layers.

Preferably, the carbon fiber body has a body root zone, which is configured similar to the body tip zone. Moreover, the rotor blade preferably comprises current receiving means for receiving electrical current from the carbon fibers and guiding the current towards the rotor blade root section. By these means, the current can be transferred away from the rotor. The current receiving means is in electrical conductive contact with the carbon fiber body in the body root zone, thereby constituting a current receiving contact area of the carbon fiber body. The current receiving contact area is extending in a way to contact carbon fibers of different carbon fiber layers. Preferably, the current receiving contact area is also extending over a width of the carbon fiber body. Thus, the current receiving means is in electrical conductive contact with a plurality of carbon fibers of different carbon fiber layers.

Since the current injection contact means are only in electrical contact with multiple carbon fiber profiles at the end of the carbon fiber body and with a down conductor to inject current into the current injection contact means, besides the carbon fibers, there is no additional electrical conductor present for conducting current through the spar cap mid area. Such current transfer is only realized by the carbon fibers. This has the advantage of a simple construction that is easy to manufacture at relatively low production costs.

The rotor blade of a wind turbine according to the invention has the advantage over known rotor blades that in an easy and cost-efficient way, electrical energy of lightning can be introduced into the carbon fiber better, and thus the risk of electrical arcing and consequent delaminations at the contact area is reduces. This has the further advantage that sustainability of the rotor blade in case of lightning is increased.

According to a preferred embodiment of the invention, the current injection contact zone is extending at least over 30% of the plurality of carbon fiber layers. More preferred, the current injection contact zone is extending at least over 50% of the plurality of carbon fiber layers. Especially preferred, the current injection contact zone is extending over the whole plurality of carbon fiber layers. The more carbon fiber layers are in contact with the current injection contact means, the more carbon fiber ends are in contact with the current injection contact means. In this context, the plurality of carbon fiber layers just refers to the plurality of carbon fiber layers that is present in the body tip zone of the carbon fiber body. This has the advantage that in an easy and cost-efficient way, electrical energy of lightning can be introduced into the carbon fibers better, and thus the risk of electrical arcing and consequent delaminations at the contact area is reduced. This has the further advantage that sustainability of the rotor blade in case of lightning is increased.

It is preferred that the carbon fiber body comprises a laminate of a plurality of pultruded carbon fiber profiles, wherein the carbon fiber profiles comprise a plurality of carbon fibers, wherein the current injection contact zone is extending at least over two carbon fiber profiles. The pultruded carbon fiber profiles are manufactured in a pultrusion process. The pultrusion process is preferably performed in a way that the carbon fibers are randomly stacked within the cross-section of the carbon fiber profile. Preferably, the carbon fibers or at least the majority of carbon fibers are arranged unidirectional within the carbon fiber profile. Such profiles have the advantage that they are easy to manufacture, easy to handle and easy to laminate together to form the carbon fiber body. Moreover, by these means, the unidirectional alignment of the carbon fibers and thus the electrical conductivity of the carbon fiber body in direction parallel to the rotor blade longitudinal axis are improved.

Advantageously, in the current injection contact zone an end section of at least one carbon fiber profile comprises a chamfered area. The current injection contact zone is constituted by end sections of the laminated carbon fiber profiles and the current injection contact means. By providing a chamfered area on a carbon fiber profile, the current injection contact zone comprises that chamfer. A chamfer has the advantage that a size of the current injection contact zone is increased. The current may be injected in the carbon fiber ends throughout the thickness of the profile. Thus, electrical conductive contact between the carbon fibers and the current injection contact means is improved. As a result, the introduction of electrical current from the current injection contact means into the carbon fibers is improved.

Preferably, a plurality of the carbon fibers of the carbon fiber body is oriented parallel or at least substantially parallel to the rotor blade longitudinal axis. More preferred, most of the carbon fibers of the carbon fiber body are oriented parallel or at least substantially parallel to the rotor blade longitudinal axis. Preferably, the carbon fibers of the carbon fiber body have a unidirectional (UD) orientation. This improves the current transmission of the carbon fiber body in direction of the rotor blade longitudinal axis and increases the structural stability of the carbon fiber body.

It is preferred that the current injection contact zone is configured or at least partly configured as a chamfered zone with respect to the rotor blade longitudinal axis. Preferably, the current injection contact zone is completely configured as a chamfered zone. A chamfered zone means that the carbon fiber body comprises a beveling in the body tip zone. The chamfered zone preferably extends over a plurality of carbon fiber layers. A chamfer has the advantage that a size of the current injection contact zone is increased. Thus, electrical conductive contact between the carbon fibers and the current injection contact means is improved. As a result, the introduction of electrical current from the current injection contact means into the carbon fibers is improved.

The current injection contact zone is configured or at least partly configured as a multiple planar zone with respect to the rotor blade longitudinal axis. Preferably, the current injection contact zone is completely configured as multiple planar zone. A multiple planar zone comprises at least two plains, separated by a chamfer and/or a step. Preferably, the multiple planar zone comprises three or more plains, separated by a chamfer and/or a step. The multiple planar zone preferably extends over a plurality of carbon fiber layers. A multiple planar zone has the advantage that a size of the current injection contact zone is increased. The current may be injected in the carbon fiber ends throughout the thickness of the profile. Thus, electrical conductive contact between the carbon fibers and the current injection contact means is improved. As a result, the introduction of electrical current from the current injection contact means into the carbon fibers is improved.

The current injection contact means is in contact with at least a first surface segment and a second surface segment of the current injection contact zone, wherein the first surface segment and the second surface segment are located on different planes. Thus, carbon fibers of different carbon fiber layers can be contacted by the current injection contact means. Thus, electrical conductive contact between the carbon fibers and the current injection contact means is improved. As a result, the introduction of electrical current from the current injection contact means into the carbon fibers is improved.

The current injection contact means is in contact with at least the first surface segment and the second surface segment of the current injection contact zone, wherein the first surface segment and the second surface segment are mutually angular. It is further preferred that the first surface segment and the second surface segment have a common contact line. Preferably, an angle between the first surface segment and the second surface segment is between 120° and 90°, more preferred between 100° and 90°. By these means, carbon fibers of different carbon fiber layers can be contacted by the current injection contact means. Thus, electrical conductive contact between the carbon fibers and the current injection contact means is improved. As a result, the introduction of electrical current from the current injection contact means into the carbon fibers is improved.

Preferably, the rotor blade comprises multiple current injection contact means, wherein the current injection contact means are electrically interconnected with each other, wherein each of the current injection contact means is in contact with a current injection contact zone of a single or multiple carbon fiber profiles. This configuration has the advantage that it is easy to manufacture due to the fitting of relatively smaller current injection contact means to the carbon fiber profiles.

It is further preferred that each of the current injection zone comprises at least one planar or at least one chamfered surface. Preferably, the planar surface is perpendicular to a longitudinal extension of the carbon fiber profile. This has the advantage that proper current injection is ensured.

According to a preferred embodiment of the invention, the electrical interconnection of the multiple current injection contact means is done by means of an additional conductor or directly with a bundle between the multiple current injection contact means. The additional conductor is electrically connected to each current injection contact means to establish the electrical interconnection. Preferably, the additional conductor comprises a material with relatively high electric conductivity such as copper or the like. The bundle is achieved by establishing a direct connection of adjacent current injection contact means, especially by bending the current injection contact means together. Such electrical interconnections have the advantage that they are easy to manufacture at relative low production costs.

The current injection contact means comprises carbon fibers. Preferably, the current injection contact means comprises a metal mesh or any other conductive material. Such current injection contact means is very suitable for injecting current into the carbon fiber body. Moreover, it can be produced at low costs and laminated to the carbon fiber body easily.

The rotor blade can be manufactured according to a method for manufacturing a rotor blade of a wind turbine. The method comprises the following steps:
- providing a plurality of pultruded carbon fiber profiles, each comprising a plurality carbon fibers, wherein the carbon fibers are oriented longitudinally with respect to a longitudinal extension of the carbon fiber profiles,
- stacking and laminating the carbon fiber profiles to generate a carbon fiber body with a body center zone, a body tip zone and a body root zone, wherein a thickness of the carbon fiber body in the body center zone is greater than a thickness of the carbon fiber body in the body tip zone, wherein the carbon fiber profiles are arranged such that, in the body tip zone, the carbon fiber body comprises a chamfered current injection contact zone and/or a multiple planar current injection contact zone, and
- applying a current injection contact means onto the current injection contact zone for establishing an electrical conductive contact, wherein the current injection contact means is applied onto the current injection contact zone in a way that the fiber ends of carbon fibers of different carbon fiber profiles are in electrical conductive contact with the current injection contact means.

Preferably, the method is used for manufacturing a rotor blade according to the invention. Providing the plurality of pultruded carbon fiber profiles can comprise the manufacturing of carbon fiber profiles in a pultrusion process. The carbon fibers profiles are pultruded such that the carbon fibers are aligned in a plurality of carbon fiber layers and unidirectional, namely in direction of the longitudinal extension of the carbon fiber profile. The carbon fiber profiles are stacked and laminated to manufacture the carbon fiber body. This is performed in a way that the thickness of the carbon fiber body in the body tip zone is smaller than the thickness of the carbon fiber body in the body center zone. In the carbon fiber tip zone, the carbon fiber body has several thicknesses. It is preferred that the stacking and laminating is performed in a way that a thickness of the body tip zone decreases with increasing distance from the body center zone. Thus, for the current injection contact zone, a chamfered current injection contact zone and/or a multiple planar current injection contact zone is provided in the body tip area. The current injection contact means is applied onto the current injection contact zone to cover the current injection contact zone. Thereby, an electrical conductive contact between the current injection contact means and carbon fibers, preferably the carbon fiber ends, of the current injection contact zone is established. Moreover, the rest of the spar cap can be manufactured by the use of alternative fiber material, such as glass fibers or the like, and the rest of the rotor blade can be assembled in a conventional manner.

The method for manufacturing a rotor blade of a wind turbine according to the second aspect of the invention has the same advantages than the rotor blade of a wind turbine according to the first aspect of the invention. Therefore, the method has the advantage that in an easy and cost-efficient way, a rotor blade can be provided that allows better introduction of electrical energy into the carbon fibers, and thus the risk of electrical arcing and consequent delaminations at the contact area is reduced. This has the further advantage that sustainability of the manufactured rotor blade in case of lightning is increased.

Further advantages, features and details of the invention unfold from the following description, in which by reference to drawings working examples of the present invention are described in detail. In the drawings:
Figure 1 shows a schematic sectional side view of a prior art body tip zone of a carbon fiber body,
Figure 2 shows a schematic sectional side view of a preferred embodiment of a carbon fiber body of a rotor blade according to the invention,
Figure 3 shows a schematic sectional side view of a body tip zone of a carbon fiber body of a preferred first embodiment of a rotor blade, which is not according to the invention,
Figure 4 shows a schematic top view of the body tip zone of figure 3,
Figure 5 shows a schematic sectional side view of a body tip zone of a carbon fiber body of a preferred second embodiment of a rotor blade,
Figure 6 shows a schematic top view of the body tip zone of figure 5,
Figure 7 shows a schematic sectional side view of a body tip zone of a carbon fiber body of a preferred third embodiment of a rotor blade,
Figure 8 shows a schematic sectional side view of a body tip zone of a carbon fiber body of a preferred fourth embodiment of a rotor blade, which is not according to the invention,
Figure 9 shows a schematic perspective view of a preferred embodiment of a rotor blade, and
Figure 10 shows a preferred embodiment of the method for manufacturing a rotor blade according to the invention in a flow chart.

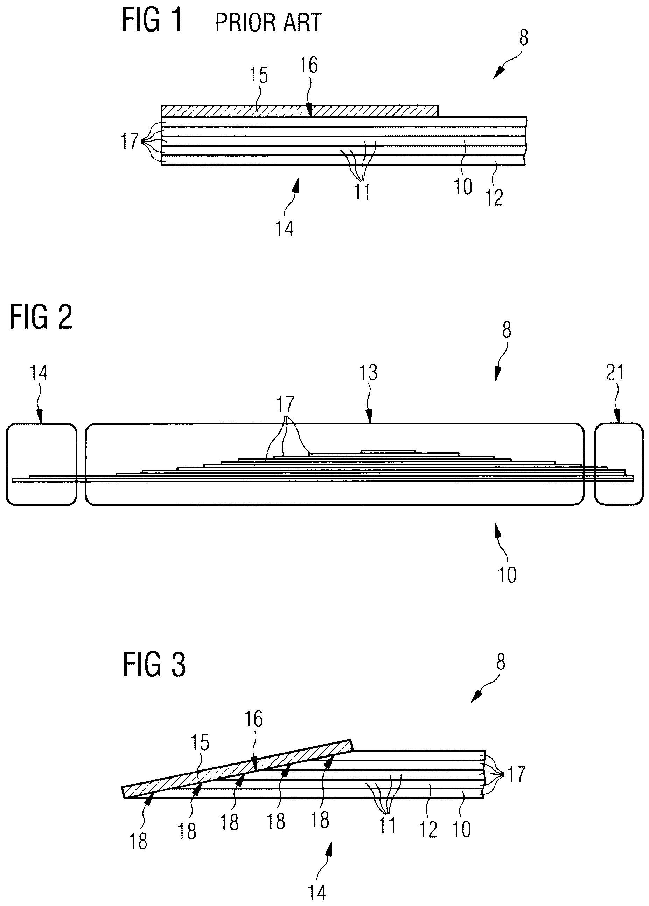

Elements with the same function and effectiveness are denoted each in figures 1 to 10 with the same reference numbers.

In fig. 1, a prior art body tip zone 14 of a carbon fiber body 10 is shown in a schematic sectional side view. The carbon fiber body 10 is part of a spar cap mid area 8. The carbon fiber body 10 comprises a plurality of carbon fiber profiles 17, each constituting a carbon fiber layer 11 with a plurality of carbon fibers 12 that are stacked and laminated. The carbon fibers 12 have a unidirectional orientation along the extension of the carbon fiber profiles 17. In this figure, the carbon fibers 12 are oriented horizontally, from left to right. On a top carbon fiber profile 17, a current injection contact means 15 is arranged in close contact, thereby constituting a current injection contact zone 16 of the top carbon fiber profile 17 of the carbon fiber body 10. This prior art embodiment has the disadvantage that current injection can only occur in a top face of the top carbon fiber layer 17. Thus, the current is injected perpendicular to the direction of the carbon fibers 12, and only to the top layer, which increases the likelihood of electrical arcing and consequent delaminations due to the large contact resistance.

Fig. 2 shows a preferred embodiment of a carbon fiber body 10 of a spar cap mid area 8 of a rotor blade 1 (see Fig. 9) according to the invention in a schematic sectional side view. The carbon fiber body 10 is structured into a body tip zone 14, a body center zone 13 and a body root zone 21. Furthermore, the carbon fiber body 10 comprises a plurality of carbon fiber profiles 17 stacked and laminated together. The thickness of the carbon fiber body 10 in the body tip zone 14 is smaller than the thickness of the carbon fiber body 10 in the body center zone 13. Likewise, the thickness of the carbon fiber body 10 in the body root zone 21 is smaller than the thickness of the carbon fiber body 10 in the body center zone 13.

In fig. 3, a body tip zone 14 of a carbon fiber body 10 of a spar cap mid area 8 of a preferred first embodiment of a rotor blade 1 is shown in a schematic sectional side view. The carbon fiber body 10 comprises a plurality of carbon fiber profiles 17 stacked and laminated together. Each carbon fiber profile 17 constitutes a carbon fiber layer, comprising a plurality of stacked carbon fibers 12. The carbon fibers 12 have a unidirectional orientation along the extension of the carbon fiber profiles 17. In this figure, the carbon fibers 12 are oriented horizontally, from left to right. Alternatively, instead of carbon fiber profiles 17, the carbon fiber body 10 can comprise a plurality of carbon fiber layers 11 of carbon fibers 12 that are stacked and laminated together to form the carbon fiber body 10. In this first embodiment, end sections 18 of the carbon fiber profiles 17 comprise a chamfer, constituting a large chamfer from the top carbon fiber profile 17 to the bottom carbon fiber profile 17. A current injection contact means 15 is arranged in close contact with the body tip zone 14, thereby constituting a current injection contact zone 16 of end sections 18 of the plurality of carbon fiber profiles 17 of the carbon fiber body 10. By these means, current injection can occur in the end sections 18 of a plurality of carbon fiber layers 17. Thus, the likelihood of electrical arcing and consequent delaminations due to the improved electrical contact to the carbon fibers 12 is reduced significantly. In this example, the current injection contact means 15 is in contact with the end sections 18 of the carbon fiber profiles 17 only. In an alternative embodiment, the current injection contact means 15 is in contact with the end sections 18 of the carbon fiber profiles 17 and a part of an upper side of the uppermost carbon fiber profile 17.

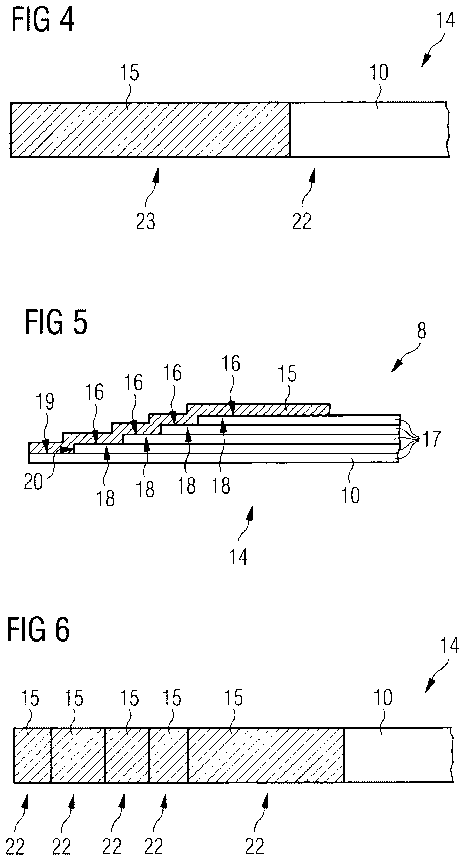

In fig. 4, the body tip zone 14 of fig. 3 is shown in a schematic top view. The current injection contact means 15 is covering a chamfered area 23 of the carbon fiber body 10. In an alternative embodiment, the current injection contact means 15 is covering a chamfered area 23 of the carbon fiber body 10. Alternatively, the current injection contact means 15 could be segmented to cover only parts of the flat area 22 and/or the chamfered area 22.

Fig. 5 shows a body tip zone 14 of a carbon fiber body 10 of a spar cap mid area 8 of a preferred second embodiment of a rotor blade 1 in a schematic sectional side view. The carbon fiber body 10 comprises a plurality of carbon fiber profiles 17 stacked and laminated together. Each carbon fiber profile 17 constitutes a carbon fiber layer 11, each comprising a plurality of stacked carbon fibers 12. The carbon fibers 12 have a unidirectional orientation along the extension of the carbon fiber profiles 17. In this figure, the carbon fibers 12 are oriented horizontally, from left to right. Alternatively, instead of carbon fiber profiles 17, the carbon fiber body 10 can comprise a plurality of carbon fiber layers 11 of carbon fibers 12 that are stacked and laminated together to form the carbon fiber body 10. In this second embodiment, end sections 18 of the carbon fiber profiles 17 are arranged with a mutual offset, constituting a multiple planar zone from the top carbon fiber profile 17 to the bottom carbon fiber profile 17. A current injection contact means 15 is arranged in close contact with the body tip zone 14, thereby constituting a current injection contact zone 16 of the end sections 18 of the plurality of carbon fiber profiles 17 of the carbon fiber body 10. As can be seen in fig. 5, the current injection contact zone 16 extends over first surface segments 19 and second surface segments 20 of the plurality of carbon fiber profiles 17, wherein each adjacent first surface segment 19 and second surface segment 20 there is an angle of 90°. By these means, current injection can occur in the end sections 18 of a plurality of carbon fiber layers 17. Thus, the likelihood of electrical arcing and consequent delaminations due to the improved electrical contact to the carbon fibers 12 is reduced significantly.

Fig. 6 shows the body tip zone 14 of fig. 5 in a schematic top view. The current injection contact means 15 is covering a plurality of flat areas 22 of a plurality of carbon fiber profiles 17 of the carbon fiber body 10. The flat areas 22 are all on different levels with respect to a thickness direction of the carbon fiber body 10.

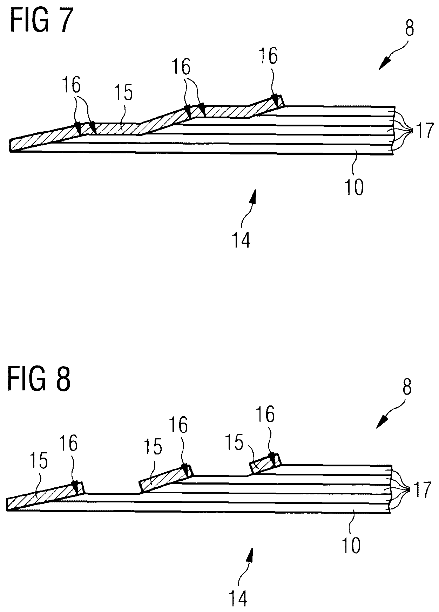

In fig. 7, a body tip zone 14 of a carbon fiber body 10 of a spar cap mid area 8 of a preferred third embodiment of a rotor blade 1 is shown in a schematic sectional side view. The carbon fiber body 10 comprises a plurality of carbon fiber profiles 17 stacked and laminated together. Each carbon fiber profile 17 constitutes a carbon fiber layer 11, each comprising a plurality of stacked carbon fibers 12. The carbon fibers 12 have a unidirectional orientation along the extension of the carbon fiber profiles 17. In this figure, the carbon fibers 12 are oriented horizontally, from left to right. Alternatively, instead of carbon fiber profiles 17, the carbon fiber body 10 can comprise a plurality of carbon fiber layers 11 of carbon fibers 12 that are stacked and laminated together to form the carbon fiber body 10. In this third embodiment, end sections 18 of the carbon fiber profiles 17 comprise a chamfer and some end sections 18 of the carbon fiber profiles 17 are arranged with a mutual offset. Thus, an end of the carbon fiber body 10 comprises from the top carbon fiber profile 17 to the bottom carbon fiber profile 17 chamfered multiple planar zones. A current injection contact means 15 is arranged in close contact with the body tip zone 14, thereby constituting a current injection contact zone 16 of the end sections 18 of the plurality of carbon fiber profiles 17 of the carbon fiber body 10. By these means, current injection can occur in the end sections 18 of a plurality of carbon fiber layers 17. Thus, the likelihood of electrical arcing and consequent delaminations due to the improved electrical contact to the carbon fibers 12 is reduced significantly.

Fig. 8, shows a modification of Fig. 7, as multiple current injection contact means 15 are connecting different current injection contact zones 16 of different carbon fiber profiles 17. Thus, the current injection contact means 15 are segmented into three separated segments.

In fig. 9, a preferred embodiment of a rotor blade 1 is shown in a schematic perspective view. The rotor blade 1 comprises a rotor blade tip section 2, a rotor blade mid section 3, a rotor blade root section 4 and a rotor blade longitudinal axis 5 extending from the rotor blade tip section 2 via the rotor blade mid section 3 to the rotor blade root section 4. The rotor blade longitudinal axis 5 is curved. In the rotor blade mid section 3, the rotor blade 1 comprises a spar cap 6 with a spar cap tip area 7, a spar cap mid area 8 and a spar cap root area 9. The spar cap mid area 8 comprises the carbon fiber body 10.

Fig. 10 schematically shows a flow chart of a preferred embodiment of the method for manufacturing a rotor blade 1 according to the invention. In a first step 100, a plurality of pultruded carbon fiber profiles 17 is provided. Each carbon fiber profile 17 comprising a plurality of carbon fibers 12, wherein the carbon fibers 12 are oriented longitudinally with respect to a longitudinal extension of the carbon fiber profiles 17. In a second step 200, the carbon fiber profiles 17 are stacked and laminated to generate a carbon fiber body 10 with a body center zone 13, a body tip zone 14 and a body root zone 21. A thickness of the carbon fiber body 10 in the body center zone 13 is greater than a thickness of the carbon fiber body in the body tip zone 14. The carbon fiber profiles 17 are arranged such that, in the body tip zone 14, the carbon fiber body 10 comprises a chamfered current injection contact zone 16 and/or a multiple planar current injection contact zone 16. In a third step 300, a current injection contact means 15 is applied onto the current injection contact zone 16 for establishing an electrical conductive contact. The current injection contact means 15 is applied onto the current injection contact zone 16 in a way that the fiber ends of carbon fibers 12 of carbon fiber profiles 17 of different carbon fiber layers 11 are in electrical conductive contact with the current injection contact means 15. Preferably, the second step 200 and the third step 300 are executed simultaneously.

## Claims

1. Rotor blade (1) for a wind turbine with a rotor blade tip section (2), a rotor blade mid section (3), a rotor blade root section (4) and a rotor blade longitudinal axis (5), extending from the rotor blade tip (2) section through the rotor blade mid section (3) to the rotor blade root section (4), wherein in the rotor blade mid section (3) the rotor blade (1) comprises a spar cap (6) with a spar cap tip area (7), a spar cap mid area (8) and a spar cap root area (9), wherein the spar cap tip area (7) is pointing to the rotor blade tip section (2) and the spar cap root area (9) is pointing to the rotor blade root section (4), wherein in the spar cap mid area (8) the spar cap comprises a carbon fiber body (10) with a plurality of carbon fiber layers (11) of carbon fibers (12), wherein a thickness of the carbon fiber body (10) in a body center zone (13) of the carbon fiber body (10) is greater than a thickness of the carbon fiber body (10) in a body tip zone (14) of the carbon fiber body (10), located between the body center zone (13) and the spar cap tip area (7), wherein a current injection contact means (15) of the rotor blade (1) is in electrical conductive contact with the body tip zone (14), thereby constituting a current injection contact zone (16) of the body tip zone (14), wherein the current injection contact zone (16) is extending at least in a direction parallel to the rotor blade longitudinal axis (5) and in a direction of the thickness of the carbon fiber body (10)
**characterized in**
**that** the current injection contact means (15) are only in electrical contact with multiple carbon fiber profiles (17) at the end of the carbon fiber body (10) and with a down conductor to inject current into the current injection contact means (15), wherein the current injection contact zone (16) is configured or at least partly configured as a multiple planar zone with respect to the rotor blade longitudinal axis (5), wherein the current injection contact means (15) is in contact with at least a first surface segment (19) and a second surface segment (20) of the current injection contact zone (16), wherein the first surface segment (19) and the second surface segment (20) are located on different planes, wherein the current injection contact means (15) is in contact with at least the first surface segment (19) and the second surface segment (20) of the current injection contact zone (16), wherein the first surface segment (19) and the second surface segment (20) are mutually angular, wherein the current injection contact means (15) comprises carbon fibers (12).

2. Rotor blade (1) according to claim 1,
**characterized in**
**that** the current injection contact zone (16) is extending at least over 30% of the plurality of carbon fiber layers (11).

3. Rotor blade (1) according to claim 1,
**characterized in**
**that** the carbon fiber body (10) comprises a laminate of a plurality of pultruded carbon fiber profiles (17), wherein the carbon fiber profiles (17) comprise a plurality of carbon fibers (12), wherein the current injection contact zone (16) is extending at least over two carbon fiber profiles (17).

4. Rotor blade (1) according to claim 3,
**characterized in**
**that** in the current injection contact zone (16) an end section (18) of at least one carbon fiber profile (17) comprises a chamfered area.

5. Rotor blade (1) according to any of the previous claims,
**characterized in**
**that** a plurality of the carbon fibers (12) of the carbon fiber body (10) are oriented parallel or at least substantially parallel to the rotor blade longitudinal axis (5).

6. Rotor blade (1) according to any of the previous claims,
**characterized in**
**that** the current injection contact zone (16) is configured or at least partly configured as a chamfered zone with respect to the rotor blade longitudinal axis (5).

7. Rotor blade (1) according to any of the previous claims,
**characterized in**
**that** the rotor blade (1) comprises multiple current injection contact means (15), wherein the current injection contact means (15) are electrically interconnected with each other, wherein each of the current injection contact means (15) is in contact with a current injection contact zone (16) of a single or multiple carbon fiber profiles (17).

8. Rotor blade (1) according to claim 7,
**characterized in**
**that** each of the current injection zones (16) comprises at least one planar or at least one chamfered surface.

9. Rotor blade (1) according to claims 7 and 8,
**characterized in**
**that** the electrical interconnection of the multiple current injection contact means (15) is done by means of an additional conductor or directly with a bundle between the multiple current injection contact means (15).

10. Rotor blade (1) according to any of the previous claims,
**characterized in**
**that** the current injection contact means (15) comprises a metal mesh or any other conductive material.

## Patentansprüche

1. Rotorblatt (1) für eine Windkraftanlage mit einem Rotorblattspitzenabschnitt (2), einem Rotorblattmittelabschnitt (3), einem Rotorblattfußabschnitt (4) und einer Rotorblattlängsachse (5), die sich von dem Rotorblattspitzen(2)-Abschnitt durch den Rotorblattmittelabschnitt (3) zu dem Rotorblattfußabschnitt (4) erstreckt, wobei das Rotorblatt (1) in dem Rotorblattmittelabschnitt (3) einen Holmgurt (6) mit einem Holmgurtspitzenbereich (7), einem Holmgurtmittelbereich (8) und einem Holmgurtfußbereich (9) umfasst, wobei der Holmgurtspitzenbereich (7) zu dem Rotorblattspitzenabschnitt (2) zeigt und der Holmgurtfußbereich (9) zu dem Rotorblattfußabschnitt (4) zeigt, wobei der Holmgurt in dem Holmgurtmittelbereich (8) einen Kohlenstofffaserkörper (10) mit einer Vielzahl von Kohlenstofffaserschichten (11) aus Kohlenstofffasern (12) umfasst, wobei eine Dicke des Kohlenstofffaserkörpers (10) in einer Körperzentrumszone (13) des Kohlenstofffaserkörpers (10) größer ist als eine Dicke des Kohlenstofffaserkörpers (10) in einer Körperspitzenzone (14) des Kohlenstofffaserkörpers (10), die sich zwischen der Körperzentrumszone (13) und dem Holmgurtspitzenbereich (7) befindet, wobei ein Stromeinspeisekontaktmittel (15) des Rotorblatts (1) in elektrisch leitendem Kontakt mit der Körperspitzenzone (14) steht, wodurch eine Stromeinspeisekontaktzone (16) der Körperspitzenzone (14) gebildet wird, wobei sich die Stromeinspeisekontaktzone (16) mindestens in einer Richtung parallel zu der Rotorblattlängsachse (5) und in einer Richtung der Dicke des Kohlenstofffaserkörpers (10) erstreckt, **dadurch gekennzeichnet, dass** die Stromeinspeisekontaktmittel (15) nur in elektrischem Kontakt mit mehreren Kohlenstofffaserprofilen (17) an dem Ende des Kohlenstofffaserkörpers (10) und mit einem Abwärtsleiter stehen, um Strom in die Stromeinspeisekontaktmittel (15) einzuspeisen, wobei die Stromeinspeisekontaktzone (16) als eine mehrfache ebene Zone in Bezug auf die Rotorblattlängsachse (5) konfiguriert oder zumindest teilweise als solche konfiguriert ist, wobei das Stromeinspeisekontaktmittel (15) mit mindestens einem ersten Flächensegment (19) und einem zweiten Flächensegment (20) der Stromeinspeisekontaktzone (16) in Kontakt steht, wobei sich das erste Flächensegment (19) und das zweite Flächensegment (20) auf unterschiedlichen Ebenen befinden, wobei das Stromeinspeisekontaktmittel (15) mit mindestens dem ersten Flächensegment (19) und dem zweiten Flächensegment (20) der Stromeinspeisekontaktzone (16) in Kontakt steht, wobei das erste Flächensegment (19) und das zweite Flächensegment (20) zueinander abgewinkelt sind, wobei das Stromeinspeisekontaktmittel (15) Kohlenstofffasern (12) umfasst.

2. Rotorblatt (1) nach Anspruch 1,
**dadurch gekennzeichnet,**
**dass** sich die Stromeinspeisekontaktzone (16) mindestens über 30 % der Vielzahl von Kohlenstofffaserschichten (11) erstreckt.

3. Rotorblatt (1) nach Anspruch 1,
**dadurch gekennzeichnet,**
**dass** der Kohlenstofffaserkörper (10) ein Laminat einer Vielzahl von pultrudierten Kohlenstofffaserprofilen (17) umfasst, wobei die Kohlenstofffaserprofile (17) eine Vielzahl von Kohlenstofffasern (12) umfassen, wobei sich die Stromeinspeisekontaktzone (16) mindestens über zwei Kohlenstofffaserprofile (17) erstreckt.

4. Rotorblatt (1) nach Anspruch 3,
**dadurch gekennzeichnet,**
**dass** in der Stromeinspeisekontaktzone (16) ein Endabschnitt (18) mindestens eines Kohlenstofffaserprofils (17) einen abgeschrägten Bereich umfasst.

5. Rotorblatt (1) nach einem der vorhergehenden Ansprüche, **dadurch gekennzeichnet,**
**dass** eine Vielzahl der Kohlenstofffasern (12) des Kohlenstofffaserkörpers (10) parallel oder mindestens im Wesentlichen parallel zu der Rotorblattlängsachse (5) ausgerichtet ist.

6. Rotorblatt (1) nach einem der vorhergehenden Ansprüche, **dadurch gekennzeichnet,**
**dass** die Stromeinspeisekontaktzone (16) als eine abgeschrägte Zone in Bezug auf die Rotorblattlängsachse (5) konfiguriert oder mindestens teilweise als solche konfiguriert ist.

7. Rotorblatt (1) nach einem der vorhergehenden Ansprüche, **dadurch gekennzeichnet,**
**dass** das Rotorblatt (1) mehrere Stromeinspeisekontaktmittel (15) umfasst, wobei die Stromeinspeisekontaktmittel (15) elektrisch miteinander verbunden sind, wobei jedes der Stromeinspeisekontaktmittel (15) mit einer Stromeinspeisekontaktzone (16) eines einzelnen oder mehrerer Kohlenstofffaserprofile (17) in Kontakt steht.

8. Rotorblatt (1) nach Anspruch 7,
**dadurch gekennzeichnet,**
**dass** jede der Stromeinspeisezonen (16) mindestens eine ebene oder mindestens eine abgeschrägte Fläche umfasst.

9. Rotorblatt (1) nach den Ansprüchen 7 und 8,
**dadurch gekennzeichnet,**
**dass** die elektrische Verbindung der mehreren Stromeinspeisekontaktmittel (15) mittels eines zusätzlichen Leiters oder direkt mit einem Bündel zwischen den mehreren Stromeinspeisekontaktmitteln (15) erfolgt.

10. Rotorblatt (1) nach einem der vorhergehenden Ansprüche,
**dadurch gekennzeichnet,**
**dass** das Stromeinspeisekontaktmittel (15) ein Metallgitter oder ein beliebiges anderes leitfähiges Material umfasst.

## Revendications

1. Pale de rotor (1) pour une éolienne avec une section de pointe de pale de rotor (2), une section médiane de pale de rotor (3), une section de pied de pale de rotor (4) et un axe longitudinal de pale de rotor (5), s'étendant de la section de pointe de pale de rotor (2) à travers la section médiane de pale de rotor (3) jusqu'à la section de pied de pale de rotor (4), dans laquelle, dans la section médiane de pale de rotor (3), la pale de rotor (1) comprend une semelle de longeron (6) avec une zone de pointe de semelle de longeron (7), une zone médiane de semelle de longeron (8) et une zone de pied de semelle de longeron (9), dans laquelle la zone de pointe de semelle de longeron (7) est orientée vers la section de pointe de pale de rotor (2) et la zone de pied de semelle de longeron (9) est orientée vers la section de pied de pale de rotor (4), dans laquelle, dans la zone médiane de semelle de longeron (8), la semelle de longeron comprend un corps en fibres de carbone (10) avec une pluralité de couches de fibres de carbone (11) de fibres de carbone (12), dans laquelle une épaisseur du corps en fibres de carbone (10) dans une zone centrale de corps (13) du corps en fibres de carbone (10) est supérieure à une épaisseur du corps en fibres de carbone (10) dans une zone de pointe de corps (14) du corps en fibres de carbone (10), située entre la zone centrale de corps (13) et la zone de pointe de semelle de longeron (7), dans laquelle un moyen de contact d'injection de courant (15) de la pale de rotor (1) est en contact conducteur électrique avec la zone de pointe de corps (14), constituant ainsi une zone de contact d'injection de courant (16) de la zone de pointe de corps (14), dans laquelle ladite zone de contact d'injection de courant (16) s'étendant au moins dans une direction parallèle à l'axe longitudinal de pale de rotor (5) et dans une direction de l'épaisseur du corps en fibres de carbone (10), **caractérisée en ce que**
les moyens de contact d'injection de courant (15) sont uniquement en contact électrique avec de multiples profilés en fibres de carbone (17) au niveau de l'extrémité du corps en fibres de carbone (10) et avec un conducteur de descente pour injecter du courant dans les moyens de contact d'injection de courant (15), dans laquelle la zone de contact d'injection de courant (16) est configurée ou au moins partiellement configurée sous la forme d'une zone plane multiple par rapport à l'axe longitudinal de pale de rotor (5), dans laquelle la zone de contact d'injection de courant (16) est configurée ou au moins partiellement configurée sous la forme d'une zone plane multiple par rapport à l'axe longitudinal de pale de rotor (5), dans laquelle le moyen de contact d'injection de courant (15) est en contact avec au moins un premier segment de surface (19) et un second segment de surface (20) de la zone de contact d'injection de courant (16), dans laquelle le premier segment de surface (19) et le second segment de surface (20) sont situés sur des plans différents, dans laquelle le moyen de contact d'injection de courant (15) est en contact avec au moins le premier segment de surface (19) et le second segment de surface (20) de la zone de contact d'injection de courant (16), dans laquelle le premier segment de surface (19) et le second segment de surface (20) présentent un angle mutuel, dans laquelle le moyen de contact d'injection de courant (15) comprend des fibres de carbone (12).

2. Pale de rotor (1) selon la revendication 1,
**caractérisée en ce que**
la zone de contact d'injection de courant (16) s'étend sur au moins 30 % de la pluralité de couches de fibres de carbone (11).

3. Pale de rotor (1) selon la revendication 1,
**caractérisée en ce que**
le corps en fibres de carbone (10) comprend un stratifié d'une pluralité de profilés en fibres de carbone pultrudés (17), dans lequel les profilés en fibres de carbone (17) comprennent une pluralité de fibres de carbone (12), dans lequel la zone de contact d'injection de courant (16) s'étend sur au moins deux profilés en fibres de carbone (17).

4. Pale de rotor (1) selon la revendication 3,
**caractérisée en ce que**
dans la zone de contact d'injection de courant (16), une section d'extrémité (18) d'au moins un profilé en fibres de carbone (17) comprend une zone chanfreinée.

5. Pale de rotor (1) selon l'une quelconque des revendications précédentes,
**caractérisée en ce**
**qu'**une pluralité des fibres de carbone (12) du corps en fibres de carbone (10) sont orientées parallèlement ou au moins sensiblement parallèlement à l'axe longitudinal de pale de rotor (5).

6. Pale de rotor (1) selon l'une quelconque des revendications précédentes, **caractérisée en ce que** la zone de contact d'injection de courant (16) est configurée ou au moins partiellement configurée comme une zone chanfreinée par rapport à l'axe longitudinal de pale de rotor (5).

7. Pale de rotor (1) selon l'une quelconque des revendications précédentes,
**caractérisée en ce que**
la pale de rotor (1) comprend de multiples moyens de contact d'injection de courant (15), dans laquelle les moyens de contact d'injection de courant (15) sont interconnectés électriquement les uns avec les autres, dans laquelle chacun des moyens de contact d'injection de courant (15) est en contact avec une zone de contact d'injection de courant (16) d'un profilé unique ou de multiples profilés en fibres de carbone (17).

8. Pale de rotor (1) selon la revendication 7,
**caractérisée en ce que**
chacune des zones d'injection de courant (16) comprend au moins une surface planaire ou au moins une surface chanfreinée.

9. Pale de rotor (1) selon les revendications 7 et 8,
**caractérisée en ce que**
l'interconnexion électrique des multiples moyens de contact d'injection de courant (15) est réalisée au moyen d'un conducteur supplémentaire ou directement avec un faisceau entre les multiples moyens de contact d'injection de courant (15).

10. Pale de rotor (1) selon l'une quelconque des revendications précédentes,
**caractérisée en ce que**
le moyen de contact d'injection de courant (15) comprend un treillis métallique ou tout autre matériau conducteur.
